Europäisches Patentamt

European Patent Office

Office européen des brevets

(19)

(11) Publication number: **0 086 766**
**B1**

# (12) EUROPEAN PATENT SPECIFICATION

(45) Date of publication of patent specification: **15.06.88**

(51) Int. Cl.⁴: **B 29 C 35/04**

(21) Application number: **83850037.9**

(22) Date of filing: **16.02.83**

(54) **Plant for the vulcanization of tyres.**

(30) Priority: **17.02.82 SE 8200957**

(43) Date of publication of application:
**24.08.83 Bulletin 83/34**

(45) Publication of the grant of the patent:
**15.06.88 Bulletin 88/24**

(84) Designated Contracting States:
**AT BE CH DE FR GB IT LI LU NL SE**

(56) References cited:
**FR-A-2 399 910**
**US-A-2 484 419**
**US-A-3 884 739**
**US-A-4 203 793**
**US-A-4 269 644**

(73) Proprietor: **Elm, Hugo Verner**
**Hjärnarpsvägen 35**
**S-262 07 Hjärnarp (SE)**

(72) Inventor: **Elm, Hugo Verner**
**Hjärnarpsvägen 35**
**S-262 07 Hjärnarp (SE)**

(74) Representative: **Ström, Tore et al**
**Ström & Gulliksson AB Studentgatan 1 P.O. Box 4188**
**S-203 13 Malmö (SE)**

Courier Press, Leamington Spa, England.

## Description

The present invention relates to a plant for the vulcanization of tyres, for example a plant of the kind in which used tyres are given a new tread, i.e. are retreaded.

Previously disclosed plants for this purpose as known from US—A—4203793 comprise a circular cylindrical autoclave with an essentially horizontal axis of symmetry, inside which the tyre units arranged for vulcanization are contained and are exposed to the combination of heat and pressure required in order to provide the tyres with new treads by vulcanization. The used tyres which are to be processed in the plant are prepared by grinding away any remaining tread, and by buffing and filling any damage, known as pot-holes, are treated by a process known as pasting, and are then fitted with a peripheral tread all around the tyre, thereby producing a casing suitable for vulcanization. The casings prepared in this way are fitted onto a split rim with an inner tube inside the casing, and with an elastic outer cover known as the envelope, which is sealed against the rim in such a way as to produce an enclosed space between the outer cover and the tyre casing. The inner tube is provided with a pressure connection nipple projecting from the rim for the supply of compressed air to the inner tube, and the outer cover is provided with a connecting nipple for the evacuation of the space located between the outer cover and the tyre casing. The tyre unit which has been prepared in this fashion is referred to in the following as the "tyre vulcanization unit" or simply as the "vulcanization unit".

The autoclave is dimensioned for the simultaneous processing of a specific number of vulcanization units. The vulcanization units are hung inside the autoclave on supports which, in order to facilitate the charging and unloading of the autoclave, are arranged for movement on a conveyor track rigidly arranged inside the autoclave. A similar conveyor track can be arranged outside the autoclave, which, when the autoclave is open, can be connected to the conveyor track arranged inside the autoclave, so that a number of vulcanization units may be hung on the supports outside the autoclave and then introduced into the autoclave one at a time or, with the supports connected together, as a group, and on being unloaded from the autoclave taken out therefrom one at a time or as a group connected together.

Before the vulcanization process in the autoclave can begin, each of the individual vulcanization units must be connected to a source of compressed air in order to supply compressed air to the inner tube, and to the environment outside the autoclave in order to evacuate the space between the outer cover and the tyre casing. For this purpose the autoclaves in the plants previously known are provided with a number of pressure connection nipples corresponding to the number of vulcanization units which are to be processed in the autoclave, said nipples being arranged at a distance from each other along the longitudinal direction of the autoclave, which corresponds to the distance between the adjacent vulcanization units. Each of the pressure connection nipples is suitably provided on the outside of the autoclave with its own shut-off valve and is connected to a source of compressed air. Similarly, a number of evacuation nipples corresponding to the number of vulcanization units is arranged inside the autoclave, said evacuation nipples being connected to the environment outside the autoclave, suitably via an evacuation line. Each of the evacuation connection nipples is also capable of being shut-off from the outside by means of its own shut-off valve. As the vulcanization units are being loaded into the autoclave, each of the individual pressure connection nipples inside the autoclave is connected by means of a flexible compressed air hose to the pressure connection nipple of the inner tube inside the vulcanization unit, and each of the individual connecting nipples from the outer cover is connected by means of a flexible hose to the evacuation nipples inside the autoclave.

Once the intended number of vulcanization units has been loaded into the autoclave and has been connected up in the afore-mentioned manner the autoclave is closed, whereupon the process therein is started up by increasing the pressure inside the autoclave, for example to about 8 kp/cm², and by raising the temperature, for example to 90—130°C. At the same time the inner tubes inside the vulcanization units are subjected to a pressure of about 6 kp/cm² whilst the space between the outer cover and the casing is connected to the evacuation line.

When the process has been completed, the pressure is reduced both in the autoclave and inside the inner tubes, and the heating is interrupted. The autoclave is then opened, whereupon the vulcanized units are taken out of the autoclave once the flexible connection hoses have been removed from the connecting nipples of each of the individual vulcanization units.

Connecting and disconnecting the flexible connection hoses with the vulcanization units when inserting them into and taking them out from the autoclave is an unpleasant and labour-intensive operation in the previously known plants, since the space is limited and the working position is uncomfortable. The need to disconnect the hoses in conjunction with the removal of the vulcanization units imposes the additional strain associated with performing the afore-mentioned unpleasant operations in a warm enviroment. Apart from the fact that the job of connecting the hoses in the previously known plants is unfavourable from the point of view of the working environment, a further disadvantage is that the connection operation takes a long time, which reduces the effective time during which the autoclave may be used for its intended purpose.

US—A—4269644 discloses a plant for the vulcanization of tyres in which the vulcanization units are arranged in a way that a group of tyres is assembled on a holding mandrel in side by side relationship with the envelopes held between the sidewalls of adjacent tyres and in which the pressure connecting nipples of the vulcanization units are connected by means of flexible hoses with a single pressure line being movable with the whole arrangement of vulcanization units into and out of the autoclave.

The object of the present invention is to provide a plant for the vulcanization of tyres, in which said connection operations have been simplified to a great extent, whereby the disadvantages associated with previously known plants are avoided or are reduced to a great extent. A further object of the invention is to provide a plant of said type which will permit a major proportion of the connection work involved for a new batch of vulcanization units to be performed outside the autoclave at the same time as a batch of vulcanization units inside the autoclave is being processed in the autoclave, and which, after completing the processing in the autoclave, will permit the rapid removal of the finished batch of vulcanization units from the autoclave followed immediately by the loading of a pre-connected batch of vulcanization units into the autoclave and the rapid connection of the batch for the supply of compressed air and for evacuation. A further aim of the invention is to provide said simplifications by simple means, and in such a way that existing plants may be modified without the need for too much rebuilding work in order to benefit from the advantages offered by the present invention.

The afore-mentioned objects are achieved by designing the plant in accordance with the particular characteristics stated in the following claims.

The invention is described below in relation to a number of embodiments illustrated in the attached drawings, in which:

Fig. 1 is a diagrammatical side view of an embodiment of a plant in accordance with the invention;

Fig. 2 is a diagrammatical plan view of the plant shown in Fig. 1;

Fig. 3 is a diagrammatical end view of the autoclave as indicated by the arrows A—A in Fig. 1;

Fig. 4 shows on a larger scale the conveyor devices in the autoclave in accordance with Fig. 3 arranged in the upper part of the autoclave;

Fig. 5 is a diagrammatical side view of an alternative embodiment of a plant in accordance with the invention;

Fig. 6 is a diagrammatical plan view of the plant shown in Fig. 5;

Fig. 7 illustrates on a larger scale the arrangement of the conveyor tracks in the plant in accordance with Figs. 5 and 6;

Fig. 8 is a diagrammatical plan view of a further variant of a plant in accordance with the invention;

Fig. 9 shows on a larger scale a section through the conveyor tracks arranged inside the autoclave in the plant in accordance with Fig. 8;

Fig. 10 is a section through the conveyor tracks in the autoclave in a further embodiment in accordance with the invention with a preferred embodiment of a bunch of lines consisting of compressed air and evacuation hoses and with an arrangement for the rapid connection of the bunch of lines to the compressed air source and to evacuation;

Fig. 11 is a sectional view as indicated by the arrows B—B in Fig. 10.

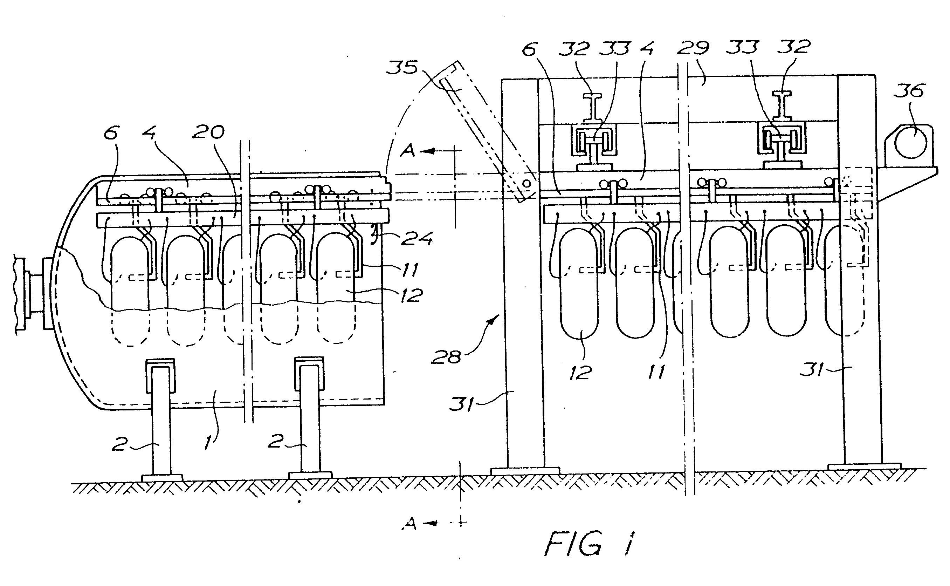

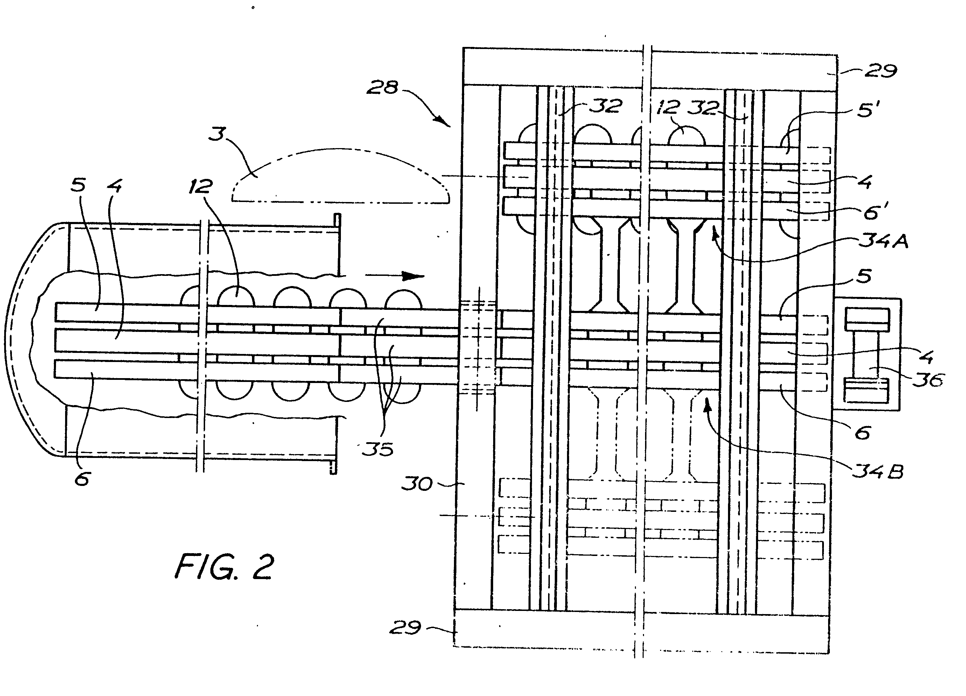

The plant in accordance with the invention illustrated in Figs. 1—4 comprises a circular cylindrical autoclave 1 having a horizontal axis of symmetry. The autoclave is supported on its base by legs 2. One of the end walls of the autoclave is in the form of a door capable of being opened and closed and consisting essentially of a rigid domed cover 3 which, by being swung to one side in the manner indicated by the dotted lines in Fig. 2, can be made to expose the whole of a loading opening having essentially the same cross-section as the cross-section of the rest of the autoclave. Inside the autoclave and extending along the entire length of the cylindrical casing are arranged three conveyor tracks, —a supporting conveyor track 4 and two lateral conveyor tracks 5 and 6 running parallel with it. The supporting conveyor track 4 which is arranged in the vertical symmetry plane of the autoclave, consists of a square hollow section 7 which is attached at the top to the inside of the casing of the autoclave, for instance by welding. The hollow section 7 of the supporting conveyor track 4 is open in direction downwards by means of a central, longitudinal slot 8 which extends for the entire length of the section. Inside the rectangular section are arranged a number of wheeled trolleys 9 having supporting yokes 10 which carry supporting devices 11 projecting downwards through the slot 8 and designed as supporting hooks having a free horizontal shank intended, when engaged in the rim of a tyre vulcanization unit 12 of the type initially described to be capable of supporting the latter. In the supporting conveyor track 4 are arranged the same number of trolleys 9 provided with supporting yokes 10 and supporting devices 11 as the number of vulcanization units 12 which are to be processed simultaneously in the autoclave 1. The trolleys 9 may be interconnected so as to move along the supporting conveyor track simultaneously, or may be capable of being left independent of each other so as to permit individual movement.

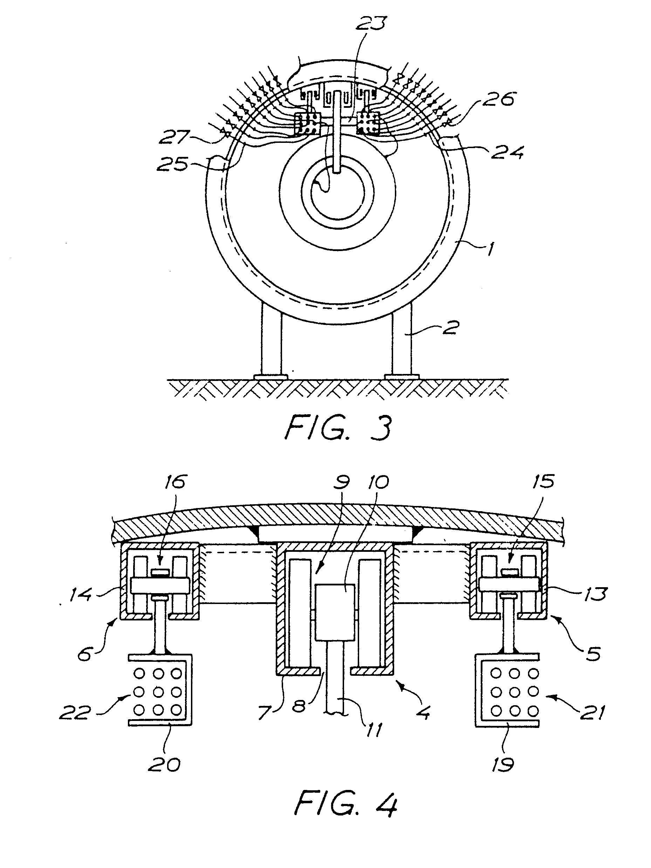

The lateral conveyor tracks 5 and 6 arranged parallel with the supporting conveyor track 4 each consists of a continuous, square hollow section 13 and 14 which, like the square hollow section 7, is provided on its bottom face with a longitudinal slot running the entire length of the section. The hollow sections 13 and 14 are designed to accept trolleys 15 and 16 fitted with yokes and running along the inside of the sections, said trolleys carrying supporting means 17 and 18 in the form of rods. The supporting means 17 and 18 are connected at their lower ends to U-shaped supporting sections 19 and 20, inside which are arranged bunches of lines 21 and 22. The bunches of lines 21 and 22 consist of rigid tubes, each bunch of lines having the same number of tubes as the number of vulcanization units 12 which are to be processed simultaneously in the autoclave. At that end of each of the bunches of lines 21 and 22 which, when the bunch of lines has been introduced fully into the autoclave, is next to the opening of the autoclave, each of the ends of the individual tubes making up the bunch of lines is fitted with a connection nipple for connecting a flexible hose. From this point the tubes extend in progressively increasing lengths, whereby each tube is terminated by a connection nipple for the connection of a flexible hose. The lengths of the tubes are selected so that the extremity of each tube coincides with the position of the vulcanization unit 12 to which the tube is intended to be connected. The tubes in the bunch of lines 21 are intended to serve as evacuation lines, whereas the tubes in the bunch of lines 22 are intended to act as compressed air supply lines. Thus, it is possible, via the two bunches of lines 21 and 22, for each of the individual vulcanization units to be connected by means of a flexible hose on one hand to an evacuation line for evacuating the space between the outer cover and the tyre casing of the vulcanization unit, and on the other to a compressed air supply line for the supply of compressed air to the inner tube of the vulcanization unit 12. The two bunches of lines 21 and 22 are arranged in a suitable fashion, for instance by means of a carrier 23 (Fig. 3), to move simultaneously together with the supporting devices 11 carrying the vulcanization units 12, so that the vulcanization units 12 and the bunches of lines 21 and 22 are movable into and out of the autoclave as a single unit with the tubes in the bunches of lines being connected to their appropriate vulcanization unit via flexible hoses.

At one end of the autoclave 1, immediately adjacent to its opening, are arranged evacuation connection means on the one hand in the form of a number of evacuation connection nipples 24 whose number corresponds to the number of vulcanization units capable of simultaneous processing in the autoclave, and on the other hand in the form of a similar number of compressed air connection nipples 25. All the connection nipples pass radially through the casing of the autoclave 1, and each of the nipples is provided outside the casing with its own shut-off valve 26 and 27. Outside the valves 26 the evacuation nipples 24 are connected to an evacuation line, and outside the valves 27 the compressed air connection nipples 25 are connected to a source of compressed air. By using flexible hoses to connect the connection nipples arranged at the end of each tube at the end of the bunch of lines 21 to the evacuation connection nipples 24, and by connecting in a similar fashion the connection nipples at the ends of the tubes making up the bunch of lines 22 to the connection nipples 25, each of the individual vulcanization units 12 may be connected to the source of compressed air for the supply of compressed air and may be connected to the evacuation line. Because the connection nipples 24 and 25 are located in the immediate vicinity of the loading opening of the autoclave 1 the connection of the flexible hoses between the connection nipples 24 and the bunch of lines 21 and between the connection nipples 25 and the bunch of lines 22 can be performed by a single person standing outside the autoclave at its loading opening. The shut-off valves 26 and 27 may also be operated from this position.

In order to facilitate the loading into and the removal from the autoclave 1 of the vulcanization units 12 a conveyor device 28 resembling an overhead crane is arranged in front of the autoclave at its opening end. The conveyor device 28 is arranged at a sufficient distance from the autoclave to permit the opening and closing of the door 3 and to enable the necessary work involved at the opening of the autoclave to be performed without inconvenience. The conveyor device 28 consists of a strong supporting frame having two supporting beams 29 running parallel with the autoclave, which at their ends are connected to each other by means of two transverse supporting beams 30. The supporting frame is supported at its corners by four pillars 31. The supporting beams 29 are connected to each other by means of two transverse overhead crane beams which on their underside are shaped as hollow sections inside which overhead crane trolleys 33 move along the overhead crane beams. The overhead crane trolleys 33 carry on their undersides two completer sets of conveyor tracks 34A and 34B. The two sets of conveyor tracks 34A and 34B are connected rigidly to each other and are movable together with the overhead crane trolleys 33 along the overhead crane tracks 32 betwen two end positions in which either the set of conveyor tracks 34B or the set 34A will be situated directly in line with the corresponding conveyor tracks inside the autoclave. Movement along the conveyor tracks is achieved by drive means for the overhead crane trolleys 33 not shown in the figures. Each of the two individual sets of conveyor tracks 34A and 34B consists of three conveyor tracks of the same design as the conveyor tracks inside the autoclave and thus comprises a central supporting conveyor track 4 and two lateral conveyor tracks 5 and 6 arranged on opposite sides thereof. Each of the sets of conveyor tracks 34A and 34B is equipped with a set of supporting trolleys having supporting devices to carry the vulcanization units together with the supporting trolleys and bunches of lines of the design described above in connection with the specification of the conveyor tracks arranged inside the autoclave. The design of the conveyor tracks harmonizes in the appropriate parts with the design illustrated in Fig. 4. In order to bridge the distance between the conveyor device 28 and the end of the autoclave, the beam 30 is provided at its mid point with an articulated coupling unit 35 consisting of conveyor tracks of the same design as the conveyor tracks arranged inside the autoclve 1. The coupling unit 35 can thus be made to adopt the position shown in Fig. 2, in which the coupling unit 35 interconnects the conveyor tracks inside the autoclave and the set of conveyor tracks 34B in the conveyor device, thereby enabling a complete batch of vulcaniation units to be moved into or removed from the autoclave. This movement can be achieved by means of a suitable drive arrangement, for example a winch 36 or some other appropriate drive means. The pivoting movement of the coupling device 35 is achieved by means of a power unit not shown in the figure.

The plant operates in the following manner. Fig. 2 illustrates the stage of the operation at which a batch of vulcanization units 12 which has been processed in the autoclave is removed from the autoclave by means of the winch 36. The coupling unit 35 is thereby in its lowered position, enabling the vulcanization units 12 together with the bunches of lines 21 and 22 to be transferred to the set of conveyor tracks 34B in the conveyor device 29. The overhead crane trolleys 33 are then made to move the two sets of conveyor tracks 34A and 34B sideways so that the set of conveyor tracks 34B is caused to adopt the position shown in Fig. 2 with dotted lines, whereby the set of conveyor tracks 34A is caused to adopt a position directly in line with the coupling component 35 and the conveyor tracks inside the autoclave. The set of transport tracks 34A now carries a new batch of vulcanization units 12 which were hung on the set of conveyor tracks 34A during the period when the previous batch of vulcanization units was being processed inside the autoclave, every vulcanization unit 12 being connected to the appropriate evacuation line or compressed air supply line by means of flexible hoses. Once the set of conveyor tracks 34A has been moved in the aforementioned position directly in line with the corresponding conveyor tracks inside the autoclave, the batch of vulcanization units together with the two bunches of lines is moved via the coupling unit 35 into a position in which it is completely inside the autoclave. The coupling component is then caused to swing upwards, whereupon the connection nipples on the ends of each of the bunches of lines 21 and 22 are connected by means of flexible hoses to the evacuation connection nipples 24 or to the compressed air connection nipples 25 at the end of the autoclave 1. This connection operation may be performed by a single person standing outside the autoclave at its end. Once the connections have been made the autoclave is closed, whereupon the shut-off valves 26 and 27 are opened for supplying compressed air and evacuating each of the vulcanization units, the autoclave simultaneously being pressurized and the necessary heating taking place. The batch of vulcanization units 12 removed from the autoclave in the previous operation is now suspended in the set of conveyor tracks 34A in the position shown by dotted lines in Fig. 2. Thus, at the same time as a new batch of vulcanization units is introduced into the autoclave for processing, the vulcanization units whose processing was completed in the previous stage may be removed from the set of conveyor tracks 34B by disconnecting the hoses and by lifting the vulcanization units off their supports. Immediately thereafter a new batch of prepared vulcanization units is hung on the supports, whereupon each individual vulcanization unit is connected by means of flexible hoses to the appropriate compressed air supply line or evacuation line in the respective bunch of lines, so that a new batch of connected vulcanization units can be introduced into the autoclave as soon as the processed batch has been removed.

Once the processing of the batch of vulcanization units 12 inside the autoclave is completed, the pressure inside the autoclave is released and the supply of heat is interrupted. The compressed air supply line is shut-off, whereupon the autoclave is opened. The connecting hoses between the connection nipples 24 and 25 and the bunches of lines 21 and 22 are then disconnected, whereupon the finished batch of vulcanization units is fed out, once the coupling unit 35 has been swung down, onto the set of conveyor tracks 34A until it is fully accommodated on the conveyor device 28. By causing the overhead crane trolleys 33 to move sideways, the set of conveyor tracks 34B supporting therein an already connected batch of vulcanization units will be caused to adopt the position shown in Fig. 2 by means of solid lines, whereupon the set of prepared vulcanization units can be introduced into the autoclave.

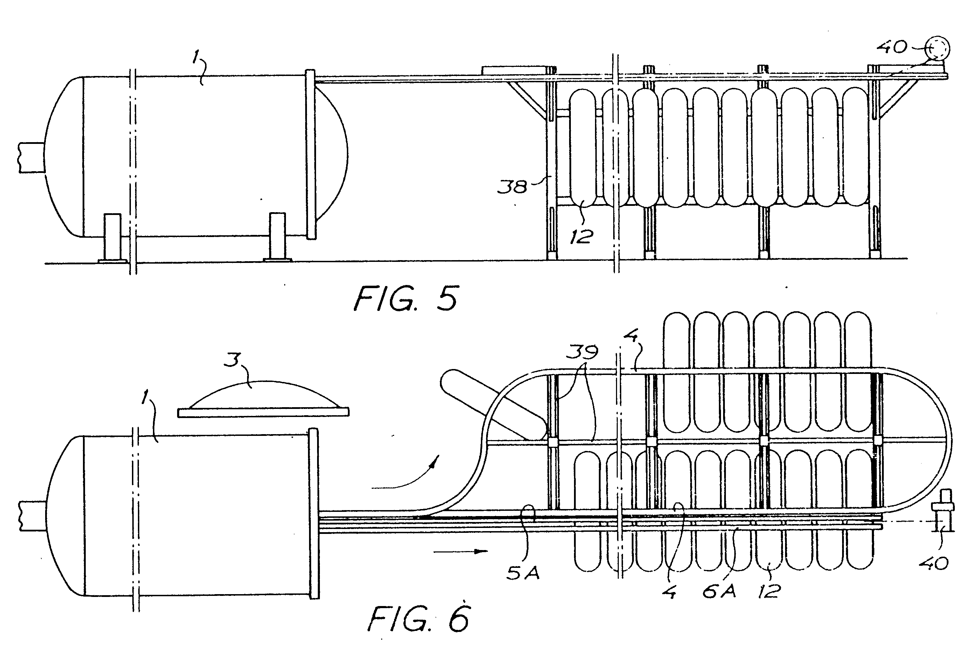

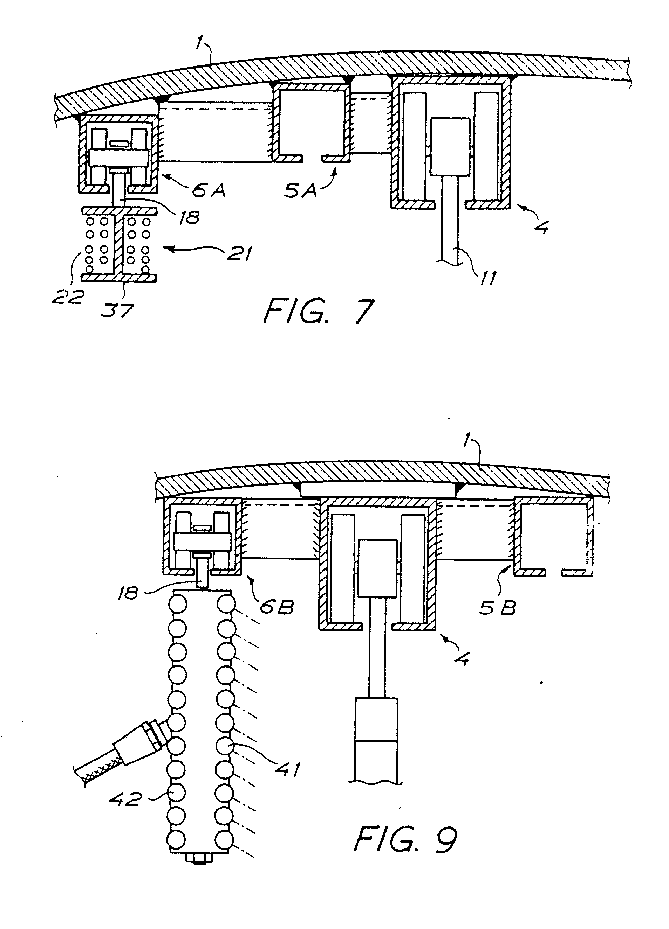

In Figs. 5—7 is illustrated an alternative embodiment of a plant in accordance with the invention. Inside the autoclave 1 are arranged a supporting conveyor track 4, as well as two lateral conveyor tracks 5A and 6A as in the embodiment described previously. The supporting conveyor track 4 is, as in the embodiment described previously, arranged in the vertical symmetry plane of the autoclave and is attached at the top to the cylindrical casing of the autoclave. The lateral conveyor tracks 5A and 6A in this embodiment are, however, both arranged on one side of the supporting conveyor track 4, running parallel with it and with each other, as shown in the figures, especially in Fig. 7. Each of the lateral conveyor tracks 5A and 6A is adapted to carry in its supporting means 18 a section 37, in which are arranged a complete bunch of compressed air supply lines as well as a complete bunch of evacuation lines. For this purpose the section 37 preferably is designed to have an I-shaped cross-section, the bunch of evacuation lines 21 being situated on one side of the web of said section 37 and the bunch of compressed air supply lines 22 being situated on the other side thereof. The supporting conveyor track 4 and the lateral conveyor tracks 5A and 6A are identical in other respects with the corresponding conveyor tracks in the embodiment described previously, for which reason they are not described in greater detail here. The bunches of lines 21 and 22 are also substantially identical with the bunches of lines in the embodiments described previously, differing in that each supporting section 37 carries both a bunch of compressed air connection lines 22 and a bunch of evacuation lines 21. The plant includes two complete sets of lines of the afore-mentioned kind, one of the sets of lines during a particular vulcanization operation to be situated inside the autoclave inserted into the lateral conveyor track 6A together with a batch of vulcanization units 12 carried by the supporting conveyor track, whereby in the subsequent vulcanization operation the second set of lines to be situated inside the autoclave inserted into the lateral conveyor track 5A together with a new batch of vulcanization units 12.

In front of the autoclave 1 on its input side is arranged a supporting structure 39 supported on pillars 38 situated at an appropriate distance from the opening of the autoclave to provide adequate working space in front of it. The supporting structure 39 carries in line with the conveyor tracks arranged inside the autoclave 1 a supporting conveyor track 4 and two lateral conveyor tracks 5A and 6A designed so as to be substantially identical with the corresponding conveyor tracks inside the autoclave and having an effective length which corresponds to the length of the autoclave. Between the supporting structure 39 and the opening of the autoclave is arranged a coupling unit for each of the conveyor tracks, said coupling unit being capable in a manner not shown in greater detail of being moved or swung out of the way so as to permit the closing or the opening of the autoclave. By connecting the coupling unit to the conveyor tracks inside the autoclave it is then possible to introduce into or to remove from the autoclave a batch of vulcanization units together with a bunch of lines. The supporting conveyor track 4, however, extends beyond the ends of the lateral conveyor tracks 5A and 6A and then following a semi-circular arc after which it extends in the direction back towards the autoclave, preferably in a straight line, to be connected again via an S-shaped bend to the coupling unit by means of switch not shown here in any great detail. The plant includes not only two complete sets of bunches of lines 21 and 22, but also two complete sets of supporting devices 11 for carrying two complete batches of vulcanization units 12.

When removing from the autoclave a batch of vulcanization units which has been processed inside it, the hose connections for connecting the bunches of lines 21 and 22 to the evacuation connection nipples 24 and to the compressed air connection nipples 25 in the autoclave are disconnected. As the vulcanization units are discharged from the autoclave together with the bunch of lines, the hose connections between the vulcanization units and the bunch of lines are disconnected, whereupon the vulcanization unit is led via the afore-mentioned switch in the supporting conveyor track 4 along the afore-mentioned S-shaped bend to a holding position along the straight part of the track 4, as shown in Fig. 6. The bunch of lines, on the other hand, is fed from the autoclave in a linear fashion into a rear position in the lateral conveyor track 6A outside the autoclave, as indicated by an arrow alongside this track in Fig. 6. At the same time two complete bunches of lines 21 and 22 are supported by the intermediate lateral conveyor track 5A, and a new batch of vulcanization units 12 for introduction into the autoclave together with the bunches of lines 21 and 22 is suspended in the supporting conveyor track 4 by means of carrier means 11. As the finished vulcanization units 12 which have been removed from the autoclave are removed from the carrier means 11, these are further moved along the semi-circular part of the supporting conveyor track 4 until they are in level with the bunches of lines 21 and 22 supported by the lateral conveyor track 6A, whereupon a new batch of vulcanization units 12 is hung on the supporting devices and is connected by means of flexible hoses to the appropriate connection nipples in the evacuation lines 21 and the compressed air supply lines 22 in the bunch, so as to produce a new ready-connected batch of vulcanization units 12 for introduction into the autoclave together with the bunch of lines being carried in the lateral conveyor track 6A. The movement of the bunches of lines 21 and 22 along the conveyor tracks and the movement of the vulcanization units into the autoclave can be achieved by means of a suitable drive means, for instance by providing a cable drive via a winch 40 or by some other means.

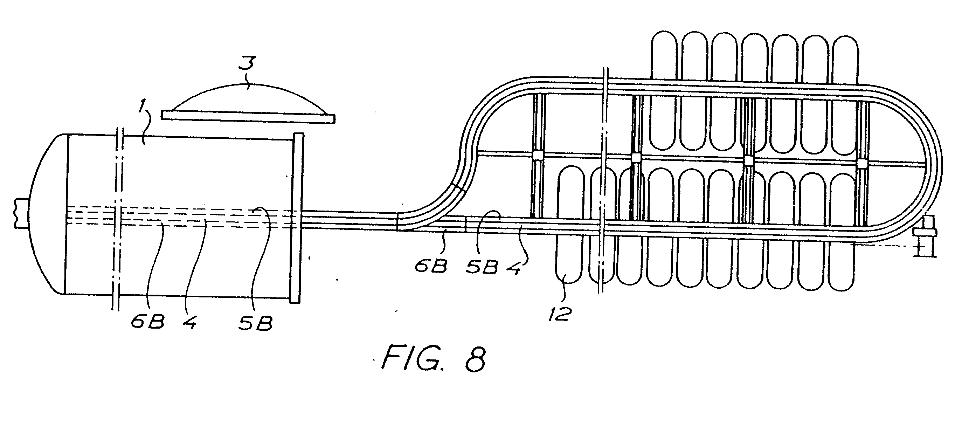

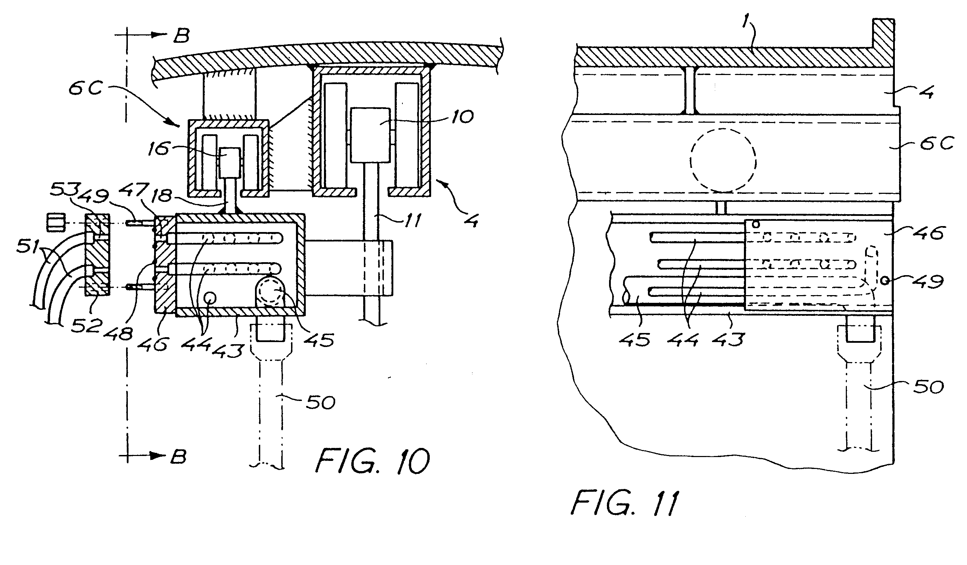

Finally, Figs. 8 and 9 illustrate a further alternative embodiment of the plant in accordance with the invention. Inside the autoclave 1 is arranged a supporting conveyor track 4 and in a symmetrical relationship thereto two lateral conveyor tracks 5B and 6B. The design and positioning of the tracks are identical with the arrangement in the first embodiment described above. Unlike that embodiment, however, the bunch of lines 21A for evacuation and the bunch of lines 21B for the supply of compressed air are both carried by the supporting means 18 on one of the lateral conveyor tracks 6B, and during the following vulcanization operation on the other lateral conveyor track 5B. In this case the bunches of lines 21A and 21B do not consist of rigid tubes, but of flexible hoses 41 for evacuation and 42 for the supply of compressed air. The supporting means 18 extend vertically and are designed in the form of vertical hose clamps to which the hoses 41 and 42 are clipped or attached in some other way. Thus, between the adjacent supporting means 18 no support is provided for the hoses 41 and 42, thereby allowing the entire bunch of hoses to flex, enabling the bunch of hoses to be guided along a curved path. Unlike the bunches of lines which consist of rigid tubes, all the hoses 41 and 42 extend along the entire length of the cylindrical part of the autoclave. Furthermore, both ends of each hose are fitted with a connection nipple enabling them to be connected to the compressed air connection nipples or to the evacuation connection nipples at the end of the autoclave. Each hose 42 intended for connection to the compressed air supply is fitted with a check valve at either end ahead of the connection nipple, said check valves being fitted in such a way that the supply of compressed air into the hose via the connection nipples at the ends of the hoses will be permitted whilst the flow of compressed air in the opposite direction is blocked. The evacuation hose lines 41 are similarly fitted at each end with a check valve, said valves being fitted in such a way that the outward flow of gas via the ends of the lines is permitted whereas the supply of compressed air via said ends of the hose line is blocked. Each of the hose lines 41 and 42 is also equipped with a branch having a connection nipple for connection to the evacuation nipple or to the compressed air supply nipple on a particular vulcanization unit. In this way the hose line nipples 41 and 42 outside the autoclave can be connected to the respective unit in a batch of vulcanization units in order to provide either a supply of compressed air or evacuation.

The conveyor device arranged outside the autoclave is to a great extent similar with the device shown in Fig. 6. The significant difference is that all three conveyor tracks 4, 5B and 6B are guided via a semi-circular bend back towards the autoclave and are connected via a switch arrangement not shown, directly in line with the conveyor tracks inside the autoclave.

Inside the autoclave are present at the same time a batch of vulcanization units and a bunch of hose lines carried, for example, in the lateral conveyor track 6B in the manner shown in Fig. 9. When this batch of vulcanization units 12 together with the bunch of hose lines 41, 42 is to be removed from the autoclave, both the carrier means 11 for the vulcanization units and the supporting means 18 for the bunch of hose lines are passed via the switch through the S-shaped curve and over its entire length onto the straight part of the tracks. The switch is the switched over so that a prepared batch of vulcanization units 12 on the other straight part of the track together with the bunch of hose lines 41, 42 carried in the lateral conveyor track 5B may be introduced into the autoclave and connected in the previously described manner. Once the vulcanization units 12 which have been taken out of the autoclave have been removed, both the interconnected supporting devices 11 for the vulcanization units and the bunch of hose lines 41, 42 carried on the supporting means 18 are passed along the semi-circular part of the track, over its entire length and onwards along the straight part of the track, where a new batch of vulcanization units 12 may be attached and connected to the respective hose line in the previously described manner. It should be noted that the end of the bunch of hose lines which was located closest to the opening of the autoclave during the previous vulcanization operation will now pass to the far end of the autoclave the next time the bunch of hose lines is introduced into the autoclave. It is for this reason that the hose lines must be equipped at both ends with connection nipples and that the previously mentioned arrangement with check valves is necessary. It must also be emphasized that each seat 13 of hose lines will be guided alternately in the lateral conveyor track 5B and the lateral conveyor track 6B.

Figs. 10 and 11 illustrate in diagrammatic form a further modified embodiment in accordance with the invention, which is particularly advantageous with regard to the bunch of lines containing compressed air and evacuation lines and with regard to the connecting of the evacuation lines to the evacuation connection nipples inside the autoclave in the vicinity of its loading opening. Inside the autoclave 1 are arranged a supporting conveyor track 4 and parallel therewith and adjacent to it a lateral conveyor track 6C. The conveyor tracks 4 and 6C, which are permanently arranged inside the autoclave, are designed in a manner which corresponds to the design of the conveyor tracks in the previously described embodiments. Thus, the lateral conveyor track 6C is intended to carry a bunch of lines for the supply of compressed air to and for the evacuation of air from the vulcanization units present inside the autoclave. The bunch of lines is carried in a supporting section 43, having a U-shaped cross-section in the embodiment illustrated in Figs. 10 and 11. The supporting section 43 is carried on rod-like supporting means 18 and on yoked trolleys 16 on the lateral conveyor track 6C and is thus able by means of the afore-mentioned trolleys to be moved between a position inside the autoclave and a position on a lateral conveyor track situated outside the autoclave in a similar fashion to that described in conjunction with the previously described embodiments. The bunch of lines consists not only of a number of evacuation lines 44 corresponding to the number of vulcanization units, but also of a single, common compressed air line 45 for all the vulcanization units. The evacuation lines 44 run parallel with each other and have, as previously described, progressively increasing lengths, whereby the inner end of each of the individual evacuation lines 44 is equipped with a connection nipple to permit connection to be made between a flexible hose and the evacuation connection on the appropriate vulcanization unit. Just opposite each of the vulcanization units the compressed air line 45 is fitted with a compressed air connection nipple to permit connection to be made between a flexible compressed air hose and the compressed air connection on each of the vulcanization units. The evacuation lines 44 are connected at their outer ends which face away from the autoclave to a first coupling plate 46 which is permanently attached to the outer end of the supporting section. The coupling plate 46 is provided with through holes 47 to which the appropriate evacuation line is connected. On the side of said coupling plate 46 which faces away from the evacuation lines 44 an O-ring 48 is arranged all around each hole 47 in a circular groove provided for that purpose. The first coupling plate 46 is also provided with two diagonally arranged guide pins 49 projecting from the plate and having threaded ends. The compressed air line 45 is bent over at the free end of the supporting section 43 and projects for a certain distance beyond the underside of the supporting section, the end of the compressed air line being designed to permit connection with a flexible compressed air hose 50 which at its opposite end is connected to a corresponding connection nipple on a compressed air lead-through which is arranged in the immediate vicinity of the loading end of the autoclave, and passes through the casing of the autoclave, and which outside the autoclave may be connected via a shut-off valve to a source of compressed air not shown here. In the wall casing of the autoclave 1 in the vicinity of its loading opening are also arranged, as previously described, a number of evacuation connection nipples corresponding to the number of vulcanization units said connection nipples extending through the wall casing of the autoclave and being fitted outside the autoclave each with its own shut-off valve. To each of the evacuation connection nipples inside the autoclave is connected a flexible evacuation hose 51, and the resulting bunch of evacuation hoses 51 are connected by their opposite ends to a second coupling plate 52, having through holes which correspond to the through holes 47 of the first coupling plate 46. The second coupling plate 52 also is provided with two through holes for the guide pins 49 which project from the first coupling plate 46. The second coupling plate 52 is connected to the first coupling plate by tightening the plates against each other by means of tensioning nuts not shown in the figures. By interconnecting the coupling plates 46 and 52 each of the vulcanization units present in the autoclave 1 is provided with an individual evacuation connection.

Through the arrangement described above in conjunction with Figs. 10 and 11, when compared with the previously described embodiments, is achieved a considerable simplification of the coupling operation required when a batch of vulcanization units has been placed in the autoclave and is to be connected to the supply of compressed air and to the evacuation connection, respectively. Not only is the connection of only a single compressed air line now required, but also a single operation will permit the simultaneous connection of all the evacuation lines. The figures illustrate an arrangement having only nine evacuation lines, implying an autoclave which contains only nine vulcanization units. In practice, the autoclaves are usually dimensioned for the simultaneous processing of considerably more vulcanization units inside the autoclave. Usually the number of vulcanization units which can be processed simultaneously amounts to twenty or more, and it will thus be appreciated, that the arrangement described in conjunction with Figs. 10 and 11 represents a considerable simplification.

The invention described above in relation to a number of embodiments is not restricted to those embodiments, but may be modified within the scope of the following claims. Thus, the arrangement of the lines described in conjunction with Figs. 10 and 11 as well as the quick-coupling arrangement based on the use of coupling plates may be used where applicable in the embodiment described in conjunction with the other figures.

Existing plants may, without the need for excessive amounts of rebuilding work, be modified in accordance with the present invention. Inside the autoclave the connection nipples spaced longitudinally therein will be replaced by tubes arranged to run up to the mouth of the autoclave, where all the connection nipples will be located. If the supporting devices for the vulcanization units are supplimented by means for supporting the bunches of lines, no additional conveyor track will be required inside the autoclave other than the track which already exists.

## Claims

1. A plant for the vulcanization of tyres, comprising an autoclave (1) having a loading opening at one end of the autoclave, which is closable in a pressure-tight manner; an internal conveyor track (4) rigidly arranged inside the autoclave in the longitudinal direction thereof for accomodating carrier means (9, 10, 11) which are movable in the longitudinal direction thereof to support a number of vulcanization units (12), each of which being provided with a compressed air connection and an evacuation connection, which by means of flexible hoses may be connected to compressed air connection nipples and evacuation nipples inside the autoclave (1); and an external conveyor device (28) arranged outside the autoclave having an external conveyor track which may be connected to the internal conveyor track arranged inside the autoclave through the aforementioned loading opening, enabling the introduction into the autoclave (1) of tyre vulcanization units (12) situated outside the autoclave and supported on the supporting devices of the conveyor track and the removal from the autoclave of vulcanized units supported on the supporting devices, characterized in that for the purpose of supplying compressed air to and evacuating air from said vulcanization units supported on the supporting devices a number of lines (21, 22, 41, 42, 44, 45) are arranged which together with the supporting devices (9, 10, 11) and the vulcanization units (12) supported thereon are movable along said internal and external conveyor tracks between a position in which they are introduced inside the autoclave and a position outside the autoclave; in that the compressed air connection on each of the individual vulcanization units (12) is detachably connected by means of a flexible hose to a compressed air line (22, 42, 45) included in said number of lines, and in that the evacuation connection on each of the individual vulcanization units is connected by means of a flexible hose to an evacuation line (21, 41, 44) arranged separately for each vulcanization unit and included in said number of lines, said lines being detachably connected at their ends which face away from the autoclave to the compressed air connection means and to the evacuation connection means (25, 24) which are permanently arranged inside the autoclave in the immediate vicinity of its loading opening.

2. A plant in accordance with claim 1, characterized in that said lines form a bunch of lines, comprising a common compressed air line (45) for all the vulcanization units (12), to which the compressed air connections for each and every one of the vulcanization units (12) are detachably connected by means of a flexible hose, and a number of evacuation lines (44) corresponding to the number of vulcanization units (12), each of said evacuation lines being connected by means of a flexible hose to the evacuation connection on the appropriate vulcanization unit (12).

3. A plant in accordance with claim 2, characterized in that the evacuation lines (44) included in said bunch of lines are connected at their ends which face away from the autoclave (1) to first coupling plate (46) accompanying the bunch of lines, having through holes (47), one for each evacuation line, and in that the evacuation connection means (25, 24) arranged inside the autoclave (1) in the vicinity of its loading opening include a second coupling plate (52) having connection through openings (53) corresponding to the through holes (47) in said first coupling plate (46), whereby all the connection through openings of said second coupling plate each being connected by means of an individual flexible hose to evacuation connections permanently arranged inside the autoclave (1), preferably in the vicinity of its loading opening, and in that said second coupling plate (52) is capable of being connected to said first coupling plate (46), preferably by means of a quick-connection, thereby providing an individual evacuation connection with the outside environment for each and every one of the vulcanization units contained inside the autoclave.

4. A plant in accordance with claims 1—3, characterized in that said lines (21, 22, 41, 42, 44, 45) are carried by supporting means (18) which are movable along a conveyor track (5, 6, 6C) permanently arranged inside the autoclave, and which runs parallel with the conveyor track for the vulcanization units (12).

5. A plant in accordance with claim 4, characterized in that said lines form two separate bunches of lines (21, 22) which are carried by means of supporting means (18) in two separate conveyor tracks (5, 6) which are arranged on opposite sides of the conveyor track for said vulcanization units (12).

6. A plant in accordance with any of the claims 1—5, characterized in that said lines are provided in the form of rigid tubes, whereby at least said evacuation lines extend inwards into the inside of the autoclave (1) with each tube line having an increasing length, and with each individual tube end being equipped with a connection nipple for connection by means of a flexible connection hose to the appropriate connection on a vulcanization unit (12).

7. A plant in accordance with any of the claims 1—6, characterized in that said conveyor device (28) arranged outside the autoclave (1) includes a set of external conveyor tracks corresponding to the internal conveyor tracks permanently arranged inside the autoclave and located directly in line with them.

8. A plant in accordance with any of the claims 1—6, characterized in that said conveyor device (28) arranged outside the autoclave (1) includes two sets of conveyor tracks (34A, 34B) laterally off-set in relation to each other and running parallel with each other, which by means of movable supporting devices (33) running across the conveyor tracks are adjustable into a first position, in which the first set of conveyor tracks (34B) is situated directly in line with the corresponding set of conveyor tracks inside the autoclave, and into a second position, in which the second set of conveyor tracks (34B) is situated in said position.

9. A plant in accordance with any of the claims 1—8, characterized in that the conveyor device arranged outside the autoclave (1) includes a rigid conveyor track which forms a linear extension of the conveyor track (4) arranged inside the autoclave (1) for the purpose of carrying the moving supporting devices (9, 10, 11) for the vulcanization units (12);

in that said track arranged outside the autoclave extends in a rectilinear direction away from the autoclave for a certain distance, which considerably exceeds the length of the autoclave, whereupon it curves through a semi-circle in the horizontal plane and extends back towards the autoclave (1), and by means of an S-shaped curve may be connected to the part of the track which ends just opposite the conveyor track inside the autoclave;

and in that the plant includes two complete sets of supporting devices (9, 10, 11) for carrying two complete batches of vulcanization units (12), of which one may be prepared for loading into the autoclave (1) whilst the other batch is situated inside the autoclave for vulcanization processing, and two complete sets of bunches of lines (21, 22, 41, 42) each of which including compressed air lines (22, 42) as well as evacuation lines (21, 41), and a first and a second conveyor track (5A, 6A) arranged parallel with each other and parallel with said conveyor track arranged in a linear fashion outside the autoclave, said tracks being arranged to carry movable supporting devices for each of said sets of bunches of lines, and in that the corresponding conveyor tracks (5A, 6A) are also arranged inside the autoclave, whereby one complete bunch of lines (21, 22, 41, 42,) is so arranged as to be situated inside the autoclave together with one batch of vulcanization units (12) at the same time as one complete bunch of lines is situated outside the autoclave for the purpose of being connected to a batch of vulcanization units (12).

10. A plant in accordance with claim 9, characterized in that the conveyor device arranged outside the autoclave (1) includes a central supporting conveyor track (4) and two lateral conveyor tracks (5A, 6A) arranged symmetrically to either side of said central track, each of which forming a linear extension of the corresponding conveyor tracks arranged inside the autoclave;

in that said tracks arranged outside the autoclave extend in a rectilinear direction away from the autoclave (1) for a distance, which considerably exceeds the length of the autoclave, and then being curved through a semicircle in the horizontal plane and continue back towards the autoclave, and may be connected again via S-shaped curves to the parts of the tracks which end just opposite the corresponding tracks inside the autoclave;

and in that said bunches of lines are in the form of flexible hose lines (41, 42) of identical length, having a length which substantially corresponds to the length of the cylindrical part of the autoclave, and in that each hose line is equipped at its outer ends with connection nipples for the connection of flexible hoses, each hose line being equipped at either end with a check valve for connection to the compressed air connection nipples of the autoclave, permitting the supply of compressed air via the ends of the hose and into the hose but which will block the flow of compressed air in the opposite direction, and whereby each hose line intended to be connected to the evacuation nipples of the autoclave is equipped at its ends with check valves so arranged as to permit the flow outwards through the ends of the hose line, but to block the flow in the opposite direction.

**Patentansprüche**

1. Anlage zu Vulkanisieren von Luftreifen, mit einem Autoklaven (1) mit einer druckdicht verschließbaren Ladeöffnung an einem Ende des Autoklaven; einer im Innern des Autoklaven in dessen Längsrichtung starr angeordneten inneren Förderbahn (4) zur Aufnahme von Trägereinrichtungen (9, 10, 11), die in ihrer Längsrichtung bewegbar sind und eine Vielzahl von Vulkanisiereinheiten (12) tragen, von denen jede mit einem Druckluftanschluß und einem Entsorgungsanschluß versehen ist, die mittels flexibler Schläuche mit Druckluft-Anschlußnippeln und Entsorgungsnippeln im Innern des Autoklaven (1) verbunden werden können; und einer außerhalb des Autoklaven angeordneten äußeren Fördervorrichtung (28) mit einer äußeren Förderbahn, die durch die vorgennante Ladeöffnung hindurch mit der im Innern des Autoklaven angeordneten inneren Förderbahn verbunden werden kann, wodurch das Beschicken des Autoklaven (1) mit außerhalb des Autoklaven befindlichen und an den Tragevorrichtungen der Förderbahn gehaltenen Luftreifen-Vulkanisiereinheiten (12) und das Entnehmen der an den Tragevorrichtungen gehaltenen vulkanisierten Einheiten aus dem Autoklaven ermöglicht ist, dadurch gekennzeichnet, daß zur Druckluft-Versorgung und Luftentsorgung der an den Tragevorrichtungen gehaltenen Vulkanisiereinheiten eine Vielzahl von Leitungen (21, 22, 41, 42, 44, 45) vorgesehen ist, die zusammen mit den Tragevorrichtungen (9, 10, 11) und den daran gehaltenen Vulkanisiereinheiten (12) entlang den inneren und äußeren Förderbahnen zwischen einer Stellung, in der sie im Innern des Autoklaven angeordnet sind, und einer Stellung außerhalb des Autoklaven bewegbar sind; daß der Druckluftanschluß an jeder einzelnen Vulkanisiereinheit (12) mittels eines flexiblen Schlauchs mit einer Druckluftleitung (22, 42, 45) aus der Vielzahl von Leitungen lösbar verbunden ist; und daß der Entsorgungsanschluß an jeder einzelnen Vulkanisiereinheit mittels eines flexiblen Schlauchs mit einer für jede Vulkanisiereinheit getrennt angeordneten Entsorgungsleitung (21, 41, 44) aus der genannten Vielzahl von Leitungen verbunden ist, wobei die genannten Leitungen an ihren dem Autoklaven entgegengesetzten Enden mit den Druckluft-Anschlußeinrichtungen und den Entsorgungs-Anschlußeinrichtungen (25, 24), die ständig innerhalb des Autoklaven in unmitelbarer Nähe zu seiner Ladeöffnung angeordnet sind, lösbar verbunden sind.

2. Anlage nach Anspruch 1, dadurch gekennzeichnet, daß die genannten Leitungen ein Leitungsbündel bilden, das eine gemeinsame Druckluftleitung (45) für alle Vulkanisiereinheiten (12), an welche die Druckluftanschlüsse für jede einzelne Vulkanisiereinheit (12) mittels eines flexiblen Schlauchs lösbar angeschlossen sind, und eine der Vielzahl von Vulkanisiereinheiten (12) entsprechende Vielzahl von Entsorgungsleitungen (44) umfaßt, wobei jede der Entsorgungsleitungen mittels eines flexiblen Schlauchs mit dem Entsorgungsanschluß an der zugehören den Vulkanisiereinheit (12) verbunden ist.

3. Anlage nach Anspruch 2, dadurch gekennzeichnet, daß die zum genannten Leitungsbündel gehörenden Entsorgungsleitungen (44) an ihren dem Autoklaven (1) entgegengestzten Enden an eine mit dem Leitungsbündel mitlaufende erste Kupplungsplatte (46) angeschlossen sind, die für jede Entsorgungsleitung ein Durchgangsloch (47) aufweist, und daß die im Innern des Autoklaven (1) in der Nähe zu seiner Ladeöffnung angeordneten Entsorgungs-Anschlußeinrichtungen (25, 24) eine zweite Kupplungsplatte (52) umfassen, die den Durchgangslöchern (47) in der ersten Kupplungsplatte (46) entsprechende Anschluß-Durchgangslöcher (53) aufweist, wodurch alle Anschluß-Durchgangslöcher der zweiten Kupplungsplatte je mittels eines einzelnen flexiblen Schlauchs mit ständig innerhalb des Autoklaven (1), vorzugsweise in der Nähe zu seiner Ladeöffnung angeordneten Entsorgungsanschlüssen verbunden sind, und daß die zweite Kupplungsplatte (52) mit der ersten Kupplungsplatte (46) vorzugsweise mittels einer Schnellkupplung verbindbar ist, dabei für jede der sich innerhalb des Autoklaven befindlichen Vulkanisiereinheiten eine individuelle Entsorgungsverbindung mit der Außenumgebung schafft.

4. Anlage nach den Ansprüchen 1 bis 3, dadurch gekennzeichnet, daß die Leitungen (21, 22, 41, 42, 44, 45) von Trageeinrichtungen (18) getragen sind, die entlang einer Förderbahn (5, 6, 6C) bewegbar sind, welche ständig im Inneren des Autoklaven angeordnet und zur Förderbahn für die Vulkanisiereinheiten (12) parallel ist.

5. Anlage nach Anspruch 4, dadurch gekennzeichnet, daß die genannten Leitungen zwei getrennte Leitungsbündel (21, 22) bilden, die von Trageeinrichtungen (18) in zwei getrennten Förderbahnen (5, 6) getragen sind, welche auf entgegengesetzten Seiten der Förderbahn für die Vulkanisiereinheiten (12) angeordnet sind.

6. Anlage nach einem der Ansprüche 1 bis 5, dadurch gekennzeichnet, daß die genannten Leitungen in Form von starren Rohren vorgesehen sind, wodurch zumindest die Entsorgungsleitungen sich nach innen ins Innere des Autoklaven (1) erstrecken, wobe jede Rohrleitung von jeweils größerer Länge ist und jedes einzelne Rohrende mit einem Anschlußnippel zum Anschluß mittels eines flexiblen Verbindungsschlauchs an den jeweiligen Anschluß an einer Vulkanisiereinheit (12) versehen ist.

7. Anlage nach einem der Ansprüche 1 bis 6, dadurch gekennzeichnet, daß die außerhalb des Autoklaven (1) angeordnete Fördervorrichtung (28) eine gruppe äußerer Förderbahnen unfaßt, die den ständig im Innern des Autoklaven angeordneten inneren Förderbahnen entsprechen und direkt in einer Linie mit ihnen angeordnet sind.

8. Anlage nach einem der Ansprüche 1 bis 6, dadurch gekennzeichnet, daß die außerhalb des Autoklaven (1) angeordnete Fördervorrichtung (28) zwei seitlich gegeneinander versetzte und zueinander parallele Gruppen von Förderbahnen (34A, 34B) umfaßt, die mittels beweglicher, quer zu den Förderbahnen angeordneter Tragevorrichtungen (33) in eine erste Stellung, in welcher die erste Gruppe von Förderbahnen (34B) direkt in einer Linie mit der entsprechenden Gruppe Förderbahnen im Innern des Autoklaven angeordnet ist, und in eine zweite Stellung verstellbar sind, in welcher die zweite Gruppe von Förderbahnen (34B) die genannte Stellung einnimmt.

9. Anlage nach einem der Ansprüche 1 bis 8, dadurch gekennzeichnet, daß die außerhalb des Autoklaven (1) angeordnete Fördervorrichtung eine starre Förderbahn umfaßt, die eine gerade Verlängerung der im Innern des Autoklaven (1) angeordneten Förderbahn (4) zum Tragen der beweglichen Tragevorrichtungen (9, 10, 11) für die Vulkanisiereinheiten (11) bildet;

daß sich die außerhalb des Autoklaven angeordnete Bahn in gerader Richtung über eine bestimmte Strecke, welche die Länge des Autoklaven beträchtlich übersteigt, vom Autoklaven weg erstreckt, danach in einem Halbkreis in der waagerechten Ebene verläuft une sich zurück zum Autoklaven (1) hin erstreckt, und mittels eines S-förmigen Kurvenstückes mit jenem Bahnabschnitt verbunden werden kann, der genau vor der im Innern des Autoklaven angeordneten Förderbahn endet;

und daß die Anlage zwei vollständige Gruppen von Tragevorrichtungen (9, 10, 11) zum Tragen von zwei vollständigen Gruppen von Vulkanisiereinheiten (12) umfaßt, von denen eine zum Beschicken des Autoklaven (1) vorbereitet werden kann, während sich die andere Gruppe zum Vulkanisieren innerhalb des Autoklaven befindet, und zwei vollständige Satz Leitungsbündel (21, 22, 41, 42), von denen jeder Druckluftleitungen (22, 42) ebenso wie Entsorgungleitungen (21, 42) umfaßt, und eine erste und eine zweite Förderbahn (5A, 6A), die parallel zueinander und zu der außerhalb des Autoklaven linear angeordneten Föderbahn angeordnet sind, wobei diese Bahnen so ausgebildet sind, daß sie bewegliche Tragevorrichtungen für jeden der Sätze von Leitungsbündeln tragen, und daß die entsprechenden Förderbahnen (5A, 6A) auch im Innern des Autoklaven angeordnet sind, wodurch ein vollständiges Leitungsbündel (21, 22, 41, 42) so angeordnet ist, daß es sich zusammen mit einer Gruppe Vulkanisiereinheiten (12) zur gleichen Zeit im Innern des Autoklaven befindet, wie ein vollständiges Leitungsbündel sich zum Verbinden mit einer Gruppe von Vulkanisiereinheiten (12) außerhalb des Autoklaven befindet.

10. Anlage nach Anspruch 9, dadurch gekennzeichnet, daß die außerhalb des Autoklaven (1) angeordnete Fördervorrichtung eine zentrale Trageförderbahn (4) und zwei seitliche Förderbahnen (5A, 6A), die beiderseits der zentralen Bahn symmetrisch angeordnet sind und je eine gerade Verlängerung der entsprechenden, im Innern des Autoklaven agneordneten Förderbahnen bilden; die außerhalb des Autoklaven angeordneten Bahnen sich in gerader Richtung über eine Strecke, welche die Länge des Autoklaven beträchtlich übersteigt, von Autoklaven weg erstrecken, dann in einem Halbkreis in de waagerechten Ebene verlaufen und zurück zum Autoklaven hin sich fortsetzen und mittels S-förmiger Kurvenstücke mit jenen Bahnabschnitten wieder verbunden werden können, die gerade vor den entsprechenden, innerhalb des Autoklaven angeordneten Bahnen enden;

und daß die Leitungsbündel die Form von flexiblen Schlauchleitungen (41, 42) von gleicher Länge haben, deren Länge im wesentlichen der Länge des zylindrischen Abschnitts des Autoklaven entspricht, und daß jede Schlauchleitung an ihren äußeren Enden mit Anschlußnippeln zum Verbinden der flexiblen Schläuche versehen ist, wobei jede Schlauchleitung an jedem Ende mit einem Rückschlagventil zum Verbinden mit den Druckluft-Anschlußnippeln des Autoklaven versehen ist, das die Zufuhr von Druckluft über die Enden des Schlauchs und in den Schlauch ermöglicht, aber die Druckluftströmung in der entgegengesetzten Richtung blockiert, und wodurch jede an die entsorgungsnippel des Autoklaven anzuschließende Schlauchleitung an ihren Enden mit Rückschlagventilen versehen ist, welche so ausgebildet sind, daß sie die nach außen durch die Enden der Schlauchleitung gerichtete Strömung ermölglichen, aber die Strömung in der entgegengesetzten Richtung blokkieren.

**Revendications**

1. Installation pour la vulcanisation de pneumatiques, comprenant un autoclave (1) ayant une ouverture de chargement à une extrémité de l'autoclave, que peut être fermée en étant étanche à la pression; une piste (4) de convoyeur interne fixée rigidement à l'intérieur de l'autoclave dans son sens longitudinal pour recevoir des moyens de support (9, 10, 11) que sont mobiles dans leur sens longitudinal afin de supporter un certain nombre d'ensembles de vulcanisation (12), chacun d'entre eux comportant un raccord d'air comprimé et un raccord d'évacuation, grâce auxquels des tuyaux flexibles peuvent être branchés sur des manchons d'air comprimé et des manchons d'évacuation à l'intérieur de l'autoclave (1); et un dispositif de convoyeur externe (28) disposé à l'extérieur de l'autoclave et comportant une piste de convoyeur externe qui peut être connectée à la piste du convoyeur interne disposée à l'intérieur de l'autoclave par l'intermédiaire de l'ouverture de chargement citée ci-dessus, permettant d'introduire dans l'autoclave (1) des ensembles de vulcanisation de pneumatiques (12) situés à l'extérieur de l'autoclave et supportés par les dispositifs de support de la piste du convoyeur et d'enlever de l'autoclave les ensembles vulcanisés supportés par les dispositifs de support, caractérisée en ce que dans le but de fournir de l'air comprisé aux ensembles de vulcanisation supportés par les dispositifs de support et d'en évacuer l'air, des conduites d'un certain nombre (21, 22, 41, 42, 44, 45) sont disposées qui en même temps que les dispositifs de support (9, 10, 11) et les ensembles de vulcanisation (12) supportés par eux sont mobiles le long des pistes des convoyeurs interne et externe entre une position dans laquelle ils sont introduits à l'intérieur de l'autoclave et une position à l'extérieur de l'autoclave; en ce que le raccord d'air comprisé de chacun des ensembles individuels de vulcanisation (12) est connecté de manière amovible au moyen d'un tuyau flexible à une conduite d'air comprimé (22, 42, 45) incorporée dans les conduites et en ce que le raccord d'évacuation de chacun des ensembles individuels de vulcanisation est connecté au moyen d'un tuyau flexible à une conduite d'évacuation (21, 41, 44) disposé séparément pour chaque ensemble de vulcanisation et incorporé dans les conduites, les conduites étant connectées de manière amovible à leurs extrémités qui sont distantes de l'autoclave, au moyen de raccord d'air comprimé et au moyen de raccord d'évacuation (25, 24) qui sont disposés en permanence à l'intérieur de l'autoclave dans le voisinage immédiat de son ouverture de chargement.

2. Installation selon la revendication 1, caractérisée en ce que les conduites forment un faisceau de condites, comprenant une conduite commune d'air comprimé (45) pour tous les ensembles de vulcanisation (12) à laquelle les raccrds d'air comprimés pour chacun des ensembles de vulcanisation (12) sont connectés de manière amovible au moyen d'un tuyau flexible, et un certain nombre de conduites d'evacuation (44) correspondant au nombre des ensembles de vulcanisation (12), chacune des conduites d'évacuation étant connectée au moyen d'un tuyau flexible au raccord d'évacuation de l'ensemble approprié de vulcanisation (12).

3. Installation selon la revendication 2, caractérisée en ce que les conduites d'évacuation (44) comprises dans le faisceau de conduites sont connectées à leures extrémités que sont distantes de l'autoclave (1) à une première plaque de couplage (46) accompagnant le faisceau de conduites, comportant des trous traversants (47), un trou pour chaque conduite d'évacuation, et en ce que le moyen de raccord d'évacuation (25, 24) disposé à l'intérieur de l'autoclave (1) dans le voisinage de son ouverture de chargement comporte une seconde plaque de couplage (52) présentant des trous traversants de connexion (52) que correspondent aux trous traversants (47) ménagés dans la première plaque de couplage (46), d'où il résulte que toutes les ouvertures traversantes de connexion de la second plaque de couplage sont chaune connectées au moyen d'un tuyau flexible individuel aux raccords d'évacuation disposés en permanence à l'interieur de l'autoclave (1), de préférence dans le voisinage de son ouverture de chargement, et en ce que la seconde plaque de couplage (52) peut être conectée à la première plaque de couplage (46), de préférence au moyen d'un raccord rapide, d'où la fourniture d'un raccord individuel d'évacuation vers l'environnement extérieur pour chacun des ensembles de vulcanisation contenus dans l'autoclave.

4. Installation selon les revendications 1 à 3, caractérisée en ce que les conduites (21, 22, 41, 42, 44, 45) sont supportées par des moyens de support (18) qui sont mobiles le long d'une piste de convoyeur (5, 6, 60) disposée en permanence à l'intérieur de l'autoclave, et qui court parallèlement à la piste de convoyeur pour les ensembles de vulcanisation (12).

5. Installation selon la revendication 4, caractérisée en ce que les conduites forment deux faisceaux séparés de conduites (21, 22) que sont portés par des moyens de support (18) dans deux pistes séparées de convoyeur (5, 6) qui sont disposées sur les côtés opposés de la piste de convoyeur les ensembles de vulcanisation (12).

6. Installation selon l'une quelconque des revendications 1 à 5, caractérisée en ce que les conduites sont fournies sous forme de tubes rigides, d'où il résulte qu'au moins les conduites d'évacuation s'étendent vers l'intérieur de l'autoclave (1) avec chaque conduite tubulaire ayant une longuer croissante, et avec chaque tube individuel équipé d'un manchon de connexion pour raccordement au moyen d'un tuyau flexible de connexion au raccord approprié d'un ensemble de vulcanisation (12).

7. Installation selon l'une quelconque des revendications 1 à 6, caractérisée en ce que le dispositif de convoyeur (28) disposé à l'extérieur de l'autoclave (1) comporte un jeu de pistes de convoyeur extérieur correspondant aux pistes de convoyeur intérieur disposées en permanence à l'intérieur de l'autoclave, et situées directement en ligne avec elles.

8. Installation selon l'une quelconque des revendications 1 à 6, caractérisée en ce que le dispositif de convoyeur (28) disposé à l'extérieur de l'autoclave (1) comporte deux jeux de pistes de convoyeur (34A, 34B) décalés latéralement l'un par rapport à l'autre et courant parallèlement l'un à l'autre, qui, au moyen de dispositifs mobiles de support (33) courant à travers les pistes de convoyeur sont réglables dans une première position, dans laquelle le premier jeu de pistes de convoyeur (34B) est situé directement en ligne avec le jeu correspondant de pistes de convoyeur à l'intérieur de l'autoclave, et dans une seconde position, dans laquelle le second jeu de pistes de convoyeur (34B) est situé dans ladite position.

9. Installation selon l'une quelconque des revendictions 1 à 8, caractérisée en ce que le dispositif de convoyeur disposé à l'extérieur de l'autoclave (1) comporte une piste rigide de convoyeur que forme un prolongement linéaire de la piste de convoyeur (4) disposée à l'intérieur de l'autoclave (1) dans le but d'acheminer les dispositifs mobiles de support (9, 10, 11) pour les ensembles de vulcanisation (12);

—en ce que la piste disposée à l'extérieur de l'autoclave s'étend dans une direction rectiligne en s'éloignant de l'autoclave sur une certaine distance, qui dépasse considérablement la longueur de l'autoclave, à la suite de quoi, elle s'incurve suivant un demi-circle dans le plan horizontal et revient vers l'autoclave (1), et au moyen d'une courbe en forme de S peut être connectée à la partie de la piste que se termine juste à l'opposé de la piste de convoyeur à l'intérieur de l'autoclave;

—et en ce que l'installation comporte deux jeux complets de dispositifs de support (9, 10, 11) pour acheminer deux lots complets d'ensembles de vulcanisation (12) dont l'un peut être préparé pour chargement dans l'autoclave (1) alors que l'autre est situé à l'intérieur de l'autoclave pour traitement de vulcanisation, et deux jeux complets de faisceaux de conduites (21, 22, 41, 42) chacun comprenant des conduites d'air comprimé (22, 42) ainsi que des conduites d'évacuation (21, 41), et une première et une second piste de convoyeur (5A, 6A) disposées parallèlement l'une à l'autre et parallèlement à la piste du convoyeur disposée de façon linéaire à l'extérieur de l'autoclave, les pistes étant agencées pour acheminer des dispositifs mobiles de support pour chacun des jeux de faisceaux de conduites, et en ce que les pistes correspondantes de convoyeur (5A, 6A) sont également disposées à l'intérieur de l'autoclave, d'où il résulte qu'un faisceau complet de conduites (21, 22, 41, 42) est disposé de manière à être situé à l'intérieur de l'autoclave en même temps qu'un lot d'ensembles de vulcanisation (12) simultanément au moment où un faisceau complet de conduites est situé à l'extérieur de l'autoclave dans le but d'être connecté à un lot d'ensembles de vulcanisation (12).

10. Installation selon la revendication 9, caractérisée en ce que le dispositif de convoyeur disposé à l'extérieur de l'autoclave (1) comporte une piste centrale (4) de convoyeur de support et deux pistes latérales (5A, 6A) de convoyeur disposés symétriquement de chaque côté de la piste centrale, chacune formant un prolongement linéaire des pistes correspondantes de convoyeur disposées à l'intérieur de l'autoclave;

—en ce que les pistes disposées à l'extérieur de l'autoclve s'étendent dans une direction rectiligne en s'éloignant de l'autoclave (1) sur une certaine distance, laquelle dépasse considérablement la longueur de l'autoclave, puis s'incurvent suivant un demi-cercle dans le plan horizontal et reviennent vers l'autoclave, et peuvent être connectées de nouveau via des courbes en form de S aux parties des pistes qui se terminent juste à l'opposé des pistes correspondantes situées à l'intérieur de l'autoclave;

—en ce que les faisceaux de conduite sont sous forme de conduites flexibles (41, 42) de longueur identique, ayant une longueur que correspond sensiblement à la longueur de la partie cylindrique de l'autoclave, et en ce que chaque conduite flexible est équipée à ses extrémités extérieures de manchons de connexion pour le raccordement de tuyaux flexibles, chaque tuyau flexible étant équipé à chaque extrémité d'une soupape de non-retour pour raccordement aux manchons de connexion d'air comprimé de l'autoclave, permettant la fourniture d'air comprimé via les extrémités du tuyau flexible et dans le tuyau flexible, mais qui bloquera la circulation d'air comprimé dans la direction opposée, et d'où il résulte que chaque conduite flexible destinée à être connectée aux manchons d'évacuation de l'autuclave est équipée à ses extrémités de soupapes de non-retour disposées de manière à permettre l'écoulement vers l'extérieur par l'intermédiaire des extrémités du tuyau flexible, mais à bloquer cet écoulement dans la direction opposée.

FIG 1

0 086 766

FIG. 2

FIG. 3

FIG. 4

FIG. 5

FIG. 6

FIG. 7

FIG. 9

5

FIG. 8

FIG. 11

FIG. 10